(19) Europäisches Patentamt
European Patent Office
Office européen des brevets

(11) **EP 1 137 973 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(21) Anmeldenummer: **99973551.7**

(22) Anmeldetag: **01.12.1999**

(51) Int Cl.:
**G05B 19/404** *(2006.01)*

(86) Internationale Anmeldenummer:
**PCT/EP1999/009318**

(87) Internationale Veröffentlichungsnummer:
**WO 2000/039647 (06.07.2000 Gazette 2000/27)**

(54) **VERFAHREN UND ANORDNUNG ZUR VERRINGERUNG TEMPERATURBEDINGTER MASSABWEICHUNGEN BEI PARALLEL ANGEORDNETEN MESSSYSTEMEN**

METHOD AND DEVICE FOR REDUCING TEMPERATURE-RELATED MEASUREMENT DEVIATIONS IN PARALLEL MEASUREMENT SYSTEMS

PROCEDE ET DISPOSITIF POUR REDUIRE LES ECARTS DE MESURE DUES A LA TEMPERATURE, DANS DES SYSTEMES DE MESURE PLACES EN PARALLELE

(84) Benannte Vertragsstaaten:
**AT BE CH CY DE DK ES FI FR GB GR IE IT LI LU MC NL PT SE**

(30) Priorität: **11.12.1998 DE 19857132**

(43) Veröffentlichungstag der Anmeldung:
**04.10.2001 Patentblatt 2001/40**

(73) Patentinhaber: **Dr. Johannes Heidenhain GmbH 83292 Traunreut (DE)**

(72) Erfinder:
• **NELLE, Günther**
  **D-83346 Bergen (DE)**
• **TONDORF, Sebastian**
  **D-83329 Waging (DE)**

(56) Entgegenhaltungen:
**EP-A- 0 304 307        DE-A- 3 924 748**
**DE-A- 4 134 371        DE-C- 3 633 573**
**US-A- 4 676 649**

**EP 1 137 973 B1**

**Beschreibung**

Die Erfindung betrifft eine Anordnung gemäß dem Oberbegriff des Anspruchs 1, 9 und 12 und ein Verfahren zur Kompensation der ermittelten Maßabweichungen.

Aus der DE 41 34 371 A1 ist eine Anordnung mit parallel zueinander angeordneten und quer zur Meßrichtung X voneinander beabstandeten Längenmeßsystemen an einer Maschine bekannt. Die beiden Längenmeßsysteme haben unterschiedliche Genauigkeitsklassen. Aus den Signalen des genaueren Längenmeßsystems wird ein absoluter Positionsmeßwert und aus den Signalen des weniger genauen Meßsystems ein dynamischer, die momentane Abweichung von der Position des anderen Meßsystems charakterisierenden Meßwert gebildet.

Aus der DE 195 31 676 C1 ist eine Vorrichtung zum Führungstoleranzausgleich bei Mehrachsenpositionierern bekannt. Bei dieser Vorrichtung ist auf einem ersten Führungsträger bezüglich einer ersten Achse ein zweiter Führungsträger durch einen zugehörigen Positionierantrieb verschiebbar gelagert. An dem zweiten Führungsträger ist bezüglich einer zweiten Achse ein weiterer Führungsträger oder ein Objekt durch einen zugehörigen Positionierantrieb verschiebbar gelagert. Die jeweilige Verschiebung auf den Führungsträgern wird durch eine jeweils zugehörige Koordinatenmeßvorrichtung laufend ermittelt. Hierfür wird auf den Führungsträgern jeweils ein Meßstrahler parallel zur Führung ausgerichtet angeordnet und an dem geführten Teil jeweils eine Abweichungsmeßvorrichtung, die mit den einzelnen Meßstrahlen beaufschlagt wird. Die Abweichungsmeßvorrichtung wird dabei derart angeordnet, daß deren Abweichungsmeßsignal jeweils mindestens eine Lageabweichung quer zur Richtung des auftreffenden Meßstrahls signalisiert.

Somit ist aus der DE 195 31 676 C1 nicht bekannt, wie temperaturbedingte Maßabweichungen parallel angeordneter Längenmeßsysteme ermittelt oder kompensiert werden können.

Speziell bei Maschinen, die eine Gantry-Struktur aufweisen, besteht das Problem, daß für die Bewegung in einer Achsrichtung zwei Führungen, zwei Antriebe und zwei Längenmeßsysteme vorgesehen sind. Damit diese Gantry-Struktur bei einer ungleichmäßigen temperaturbedingten Ausdehnung der Längenmeßsysteme, deren Ausgangssignale zur Regelung der Antriebsbaugruppen benutzt werden, nicht verkantet, muß eine unterschiedliche temperaturbedingte Ausdehnung der beiden Längenmeßsysteme kompensiert werden.

Aus dem Stand der Technik ist bereits bekannt, an verschiedenen Stellen der Anordnung die jeweilige Temperatur zu messen. Unter Berücksichtigung des spezifischen Wärmeausdehnungskoeffizienten werden dann die temperaturbedingten Längenänderungen insbesondere der Längenmeßsysteme berechnet und kompensiert.

Dabei ist von Nachteil, daß die Wärmeausdehnungskoeffizienten der LängenLängenmeßsysteme und der Maschine nur ungenau bestimmt werden können. Die Ausdehnung der Maschine auf einer ersten Seite wird insbesondere bei großen Maschinen durch die aufgrund des Temperaturunterschiedes andere Ausdehnung auf einer zweiten Seite der Maschine beeinflußt. Die an beiden Maschinenseiten befestigten LängenLängenmeßsysteme werden durch die Geometrieänderung der Maschine ebenfalls relativ zueinander verschoben. Eine derartige Verschiebung der Längenmeßsysteme zueinander führt zwangsläufig zu einem Verkanten einer Gantry-Baugruppe, deren beidseitige Antriebe aufgrund der Ausgangssignale der Längenmeßsysteme geregelt werden.

In der US 4,676,649 ist ein X-Y Tisch beschrieben, bei dem zwei parallel nebeneinander angeordnete Längenmeßsysteme in Form von Interferometern vorgesehen sind. Temperaturbedingte Verlagerungen der Längenmeßsysteme zu erfassen ist nicht offenbart.

Es stellt sich daher die Aufgabe, eine Anordnung zur Ermittlung von temperaturbedingten Maßabweichung parallel angeordneter Längenmeßsysteme und ein Verfahren zu deren Kompensation anzugeben.

Diese Aufgabe wird durch eine Anordnung mit den Merkmalen des Anspruchs 1 und 9 und ein Verfahren mit den Merkmalen des Anspruchs 15 gelöst.

Weiterhin soll eine Anordnung angegeben werden, bei der eine relative Verschiebung der Längenmeßsysteme zueinander aufgrund temperaturbedingter Geometrieänderungen nicht mehr erfolgen kann.

Diese Aufgabe wird durch eine Anordnung mit den Merkmalen des Anspruchs 12 gelöst.

Vorteilhafte Ausführungsformen der erfindungsgemäßen Anordnung und des erfindungsgemäßen Verfahrens ergeben sich aus den Merkmalen der jeweils abhängigen Ansprüche.

Die erfindungsgemäße Anordnung weist den Vorteil auf, daß aufgrund einer Verbindungsbrücke, deren Geometrie höchstens eine sehr geringe Abhängigkeit von der Temperatur aufweist, entweder die beiden parallel ausgerichteten Meßsysteme unmittelbar zueinander fixiert werden oder daß Veränderungen der Meßsysteme in Meßrichtung durch im Bereich der Enden der Meßsysteme auf der Verbindungsbrücke angebrachte zusätzliche Meßgeräte ermittelt werden und die durch die Meßgeräte ermittelten Werte zur Kompensation der durch die parallel ausgerichteten Meßsysteme ermittelten Meßwerte benutzt werden. Dabei kann die Verbindungsbrücke sowohl materiell durch ein Material mit möglichst kleinem Temperaturausdehnungskoeffizienten realisiert werden, als auch mittels eine Lichtstrahls, der dazu benutzt wird, die Verschiebung eines der parallelen Längenmeßsysteme relativ zum anderen zu bestimmen.

Weitere vorteilhafte Ausgestaltungen sind den jeweils abhängigen Ansprüchen und der Beschreibung zu entnehmen.

Einzelheiten der Erfindung werden im folgenden anhand der in der Zeichnung dargestellten Ausführungsform näher erläutert.

Es zeigt:

Figur 1 eine Draufsicht auf eine Maschine mit Gantry-Struktur,

Figur 2 eine erste mögliche erfindungsgemäße Anordnung,

Figur 3 eine zweite mögliche erfindungsgemäße Anordnung,

Figur 4 eine dritte mögliche erfindungsgemäße Anordnung,

Figur 5 eine vierte mögliche erfindungsgemäße Anordnung,

Figur 6 eine fünfte mögliche erfindungsgemäße Anordnung,

Figur 7 eine sechste mögliche erfindungsgemäße Anordnung,

Figur 8 eine siebte mögliche erfindungsgemäße Anordnung,

Figur 9 eine achte mögliche erfindungsgemäße Anordnung und

Figur 10 die Bezeichnung der Meßwerte einer Anordnung nach Figur 3

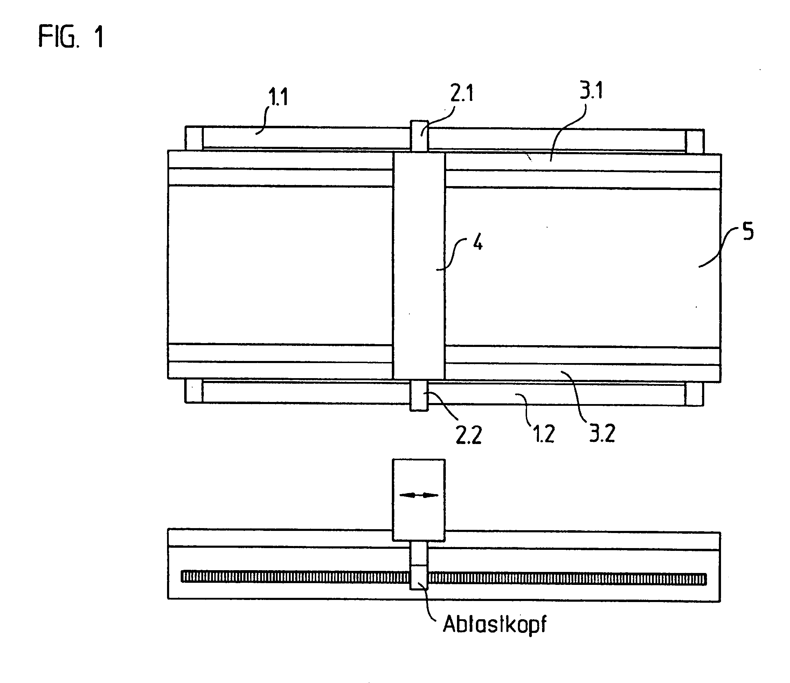

In Figur 1 ist die prinzipielle Gantry-Struktur schematisch dargestellt. Der Bearbeitungsraum 5, auf dem sich das zu bearbeitende Werkstück befindet, wird von den Führungsbahnen 3.1 und 3.2 begrenzt, entlang denen sich eine senkrecht zu den beiden Führungsbahnen 3.1 und 3.2 verlaufende Gantry-Achse 4 bewegen kann. Entlang den Führungsbahnen 3.1 und 3.2 sind außerhalb des Bearbeitungsraums 5 jeweils Maßstäbe 1.1 und 1.2 für Längenmeßsysteme vorgesehen. Diese Maßstäbe 1.1 und 1.2 werden durch Abtasteinheiten 2.1 und 2.2, welche je auf einer Seite der Gantry-Achse befestigt sind, abgetastet.

Wird nun die Maschine ungleichmäßig erwärmt, erfolgt eine ungleichmäßige Geometrieänderung der Maschine und damit eine relative Verschiebung der mit der Maschine verbundenen Maßstäbe 1.1 und 1.2 zueinander. Da diese Maßstäbe unter anderem Positionsinformationen zur Steuerung der beiden Antriebe entlang den Führungsbahnen 3.1 und 3.2 liefern, wobei die Antriebe absolut synchron laufen müssen, kann bei verschobenen Maßstäben 1.1 und 1.2 ein Verkanten der Gantry-Achse nicht ausgeschlossen werden. Um dies zu verhindern, wird erfindungsgemäß entweder eine Verschiebung der Befestigungspunkte oder Enden der Maßstäbe verhindert oder gemessen und kompensiert.

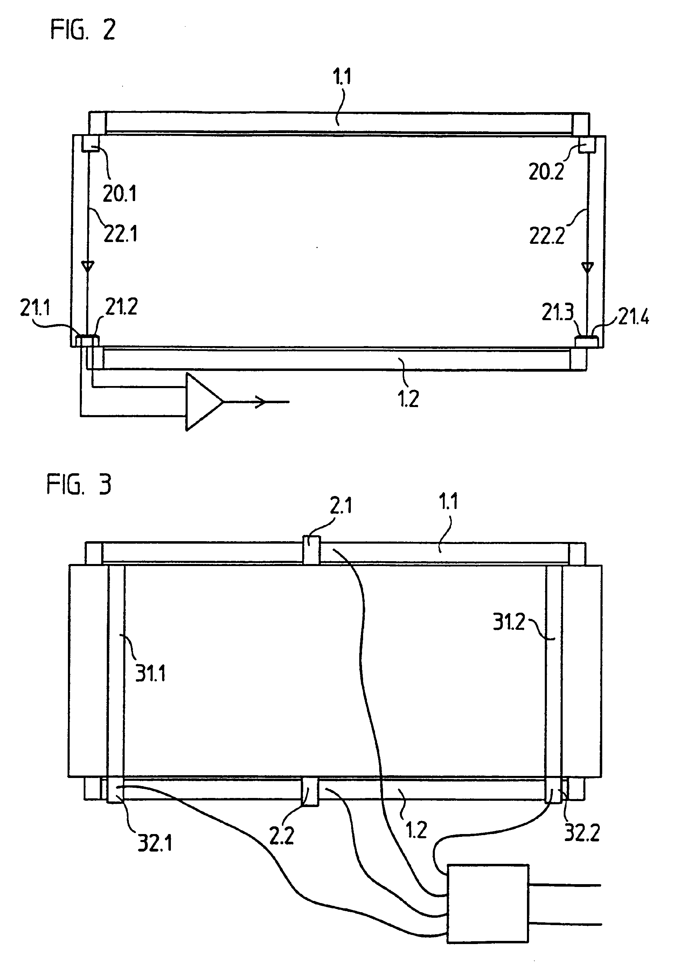

Um eine relative Verschiebung der beiden Maßstäbe 1.1 und 1.2 quantifizieren zu können, wird die in Figur 2 dargestellte erfindungsgemäße Anordnung benutzt. Figur 2 zeigt nur noch die beiden Maßstäbe 1.1 und 1.2, die Maschine wurde aus Vereinfachungsgründen weggelassen. Erfindungsgemäß wird im Endbereich mindestens eines der beiden parallelen Maßstäbe 1.1 und 1.2 ein Laser 20.1 angeordnet und fest mit dem Ende des Maßstabs 1.1 und/oder dem Maschinenbett verbunden. Der Laserstrahl 22 strahlt in Richtung des anderen Maßstabs 1.2, vorzugsweise senkrecht zur Meßrichtung, mit einem thermisch stabilen Winkel. Im Bereich des Endes des anderen Maßstabs 1.2 trifft der Laserstrahl 22 auf den anderen Maßstab 1.2. Dort sind Fotodioden 21.1 und 21.2 nebeneinander derart angeordnet, daß der Laserstrahl 22 in einem Kalibrierzustand, also bei Kalibriertemperatur und ohne Veränderung der Geometrie, im wesentlichen zwischen den beiden Fotodioden 21.1 und 21.2 auftrifft. Sobald eine ungleichmäßige Erwärmung zu einer Veränderung der Maschinengeometrie führt, verschiebt sich das eine Ende von Maßstab 1.1, an dem der Laser 20.1 befestigt ist, relativ zu dem anderen Ende des Maßstabs 1.2, an dessen gegenüber liegendem Ende die Fotodioden 21.1 und 21.2 befestigt sind. Dadurch ändert sich die Strahlungsintensität des auf die beiden Fotodioden 21.1 und 21.2 treffenden Laserstrahls 22 im Vergleich zum Kalibrierzustand. Durch eine Differenzverstärkung der beiden Ausgangssignale der Fotodioden 21.1 und 21.2 in einem Differenzverstärker, gibt dieser eine der relativen Verschiebung der beiden Maßstäbe 1.1 und 1.2 zueinander proportionale Spannung aus.

An den anderen beiden Enden der Maßstäbe 1.1 und 1.2 wird ebenso ein Laser 20.2 bzw. werden zwei Fotodioden 21.3 und 21.4 befestigt und die relative Verschiebung von dem anderen Ende des Maßstabs 1.2 zum anderen Ende des Maßstabs 1.1 ermittelt.

Sind die verwendeten Fotodioden auch vertikal empfindlich, beispielsweise vier Quadranten-Fotodioden, kann auch die Geometrieänderung der Maßstäbe 1.1 und 1.2 in der Höhe bestimmt werden. Die Verbindungsbrücke zwischen Maßstab 1.1 und 1.2 wird hier durch einen Laserstrahl realisiert, der keine temperaturabhängige Geometrieänderung aufweist. Die Verbindungspunkte der Verbindungsbrücken an Maßstab 1.1 sind dadurch fixiert, daß der Laser 20.1 oder 20.2 mit den beiden Maßstabenden von Maßstab 1.1 fest verbunden sind. Die Verschiebungen der Verbindungspunkte der Verbindungsbrücken am Maßstab 1.2 werden durch die auftretenden Spannungsänderungen der Fotodioden 21. 1 und 21.2 bzw. 21.3 und 21.4 ermittelt und zur Quantifizierung der Geometrieänderung sowie deren Kompensation benutzt.

Figur 3 zeigt eine weitere erfindungsgemäße Ausführungsform. Die Verbindungsbrücke 31.1 wird an ihrem einen Ende im Bereich des Endes eines der beiden Maßstäbe fixiert, beispielsweise Maßstab 1.1. An ihrem anderen Ende weist die Verbindungsbrücke 31.1 einen Abtastkopf 32.2 für den Maßstab 1.2 auf. Liegt nunmehr eine Verschiebung von Maßstab 1.2 relativ zu Maßstab 1.1 vor, wird diese Verschiebung durch den Abtastkopf 32.1, der Maßstab 1.2 abtastet, quantifiziert. Auch an den beiden anderen Enden der Maßstäbe 1.1 und 1.2 ist eine derartige Verbindungsbrücke 31.2 vorgesehen, von der ein Ende im Bereich eines Endes von einem ersten Maßstab 1.1 fixiert ist und von der das andere Ende einen Abtastkopf 32.2 für den anderen Maßstab 1.2 trägt. Dabei ist darauf zu achten, daß das Material aus dem die Verbindungsbrücken 31.1 und 31.2 gefertigt werden, einen möglichst kleinen Temperaturausdehnungskoeffizienten aufweist. Dadurch wird sichergestellt, daß nicht auch die Verbindungsbrücken temperaturabhängigen Geometrieänderungen unterworfen ist. Wird somit die relative Verschiebung der beiden Enden von Maßstab 1.2 zu den beiden Enden von Maßstab 1.1 quantifiziert, kann ein Modell für die temperaturabhängige Geometrieänderung von einem ersten zu einem zweiten parallelen Maßstab in Meßrichtung bestimmt werden, mit dem jeder durch die Abtastköpfe 2.2 oder 2.1 gemessene Wert korrigiert werden kann. Bei diesem Ausführungsbeispiel wird der Maßstab von einem der beiden Meßsysteme 1.2 auch für die Ermittlung der Geometrieänderung in Meßrichtung mitbenutzt.

Die Verbindungsbrücke kann dabei derart konstruiert werden, daß ihre temperaturbedingte Ausdehnung nahezu Null wird. Insbesondere vorteilhaft erscheint, den Abtastkopf 32.1 oder 32.2 für den Maßstab 1.2 am Verbindungspunkt zweier V-förmig verbundener Streben aus Invar oder Vacodil zu realisieren, deren andere Enden im Bereich des Endes des anderen Maßstabs 1.1 fest mit der Maschine verbunden sind.

Die Ausgangssignale alle Meßsysteme 1.1 mit 2.1, 1.2 mit 2.2, 32.1 und 32.2 werden einer Kompensationselektronik zugeleitet, in der das mathematische Modell für die Ausdehnung der Maßstäbe berechnet wird. Hierfür ist ein Prozessor vorgesehen, in dem bereits ein Modell höherer Ordnung gespeichert ist, für das, abhängig von den in den Abtastköpfen 32.1 und 32.2 ermittelten Werten, die Koeffizienten berechnet werden. Anschließend werden die Meßwerte der Abtastköpfe 2.1 und 2.2 um einen für den Meßwert individuellen Korrekturwert, der mit Hilfe des Modells ermittelt wird, korrigiert. Alternativ kann die Korrektur der durch die Abtastköpfe 2.1 und 2.2 ermittelten Werte auch in einer Steuerung erfolgen, die weitere Steuerungsfunktionen für die Maschine realisiert.

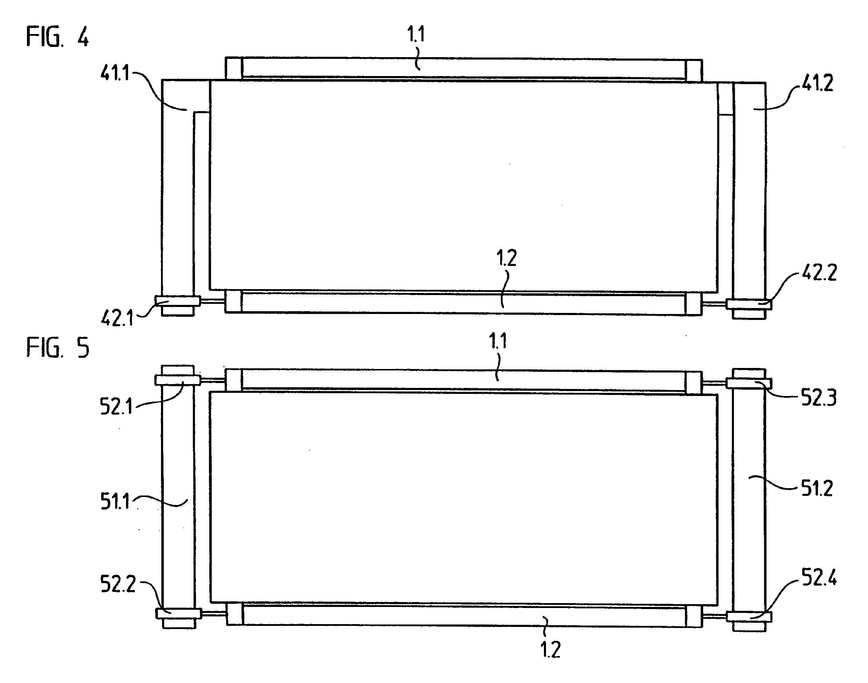

In Figur 4 ist eine weitere erfindungsgemäße Ausführungsform dargestellt. Ähnlich wie beim vorhergehenden Ausführungsbeispiel ist im Bereich der Enden eines Maßstabs 1.1 je ein Ende von zwei temperaturstabilen Verbindungsbrücken 41.1 und 41.2 fixiert. Am anderen Ende der Verbindungsbrücken 41.1 und 41.2 ist jeweils ein Taster 42.1 und 42.2 vorgesehen, der die Verschiebung der Enden des anderen Maßstabs 1.2 in Meßrichtung relativ zu Maßstab 1.1 quantifizieren. Mit diesen Meßwerten kann wiederum ein Modell für die temperaturbedingte Geometrieänderung von Maßstab 1.2 relativ zu Maßstab 1.1 ermittelt werden. Im Vergleich zum Ausführungsbeispiel aus Fig. 3 zeichnet sich diese Realisierung dadurch aus, daß spezielle Meßgeräte, die Taster 42.1 und 42.2, dazu benutzt werden, die relative Verschiebung von einem ersten Maßstab 1.1 zu einem zweiten Maßstab 1.2 zu ermitteln.

Die Verbindungsbrücken 41.1 und 41.2 werden dabei an einer schmalen Stelle an der Maschine befestigt. Durch diese eine Verbindung wird sichergestellt, daß sich die Verbindungsbrücken 41.1 und 41.2 nicht verformen, wenn sich die Geometrie der Maschine temperaturabhängig ändert. Weiterhin kann dadurch ein starker Wärmeübergang von der Maschine zu den Verbindungsbrücken 41.1 und 41.2 verhindert werden. Alternativ dazu ist auch eine einseitige Verbindung der Verbindungsbrücken 41.1 und 41.2 mit dem Fundament möglich, auf dem auch die Maschine aufgestellt ist.

In Figur 5 ist ein Ausführungsbeispiel der erfindungsgemäßen Anordnung dargestellt, bei dem vier Meßtaster vorgesehen sind, die die Verschiebung der Enden der Maßstäbe 1.1 und 1.2 in Meßrichtung quantifizieren. Diese Meßtaster sind auf temperaturstabilen Verbindungsbrücken gelagert. Sobald sich die Geometrie der Maschine verändert und dadurch die Enden der Maßstäbe 1.1 und 1.2 verschoben werden, werden die Meßtaster 52.1 bis 52.4 entsprechend betätigt. Aus diesen Meßwerten kann wiederum ein Modell für die Geometrieänderung der Maschinen berechnet werden, und es kann jeder Meßpunkt der über die Abtasteinheiten 2.1 und 2.2 der Gantry-Achse 4 ermittelten Meßwerte korrigiert werden. Eine derartige Ausführung ist besonders dann vorteilhaft, wenn Verbindungsbrücken 41.1 und 41.2 aus Fig 4 von den Enden des einen Meßsystems 1.1 zu den Enden des anderen Meßsystems 1.2 bei Temperaturänderungen nicht parallel zur ursprünglichen Maschinengeometrie vor der Erwärmung bleiben.

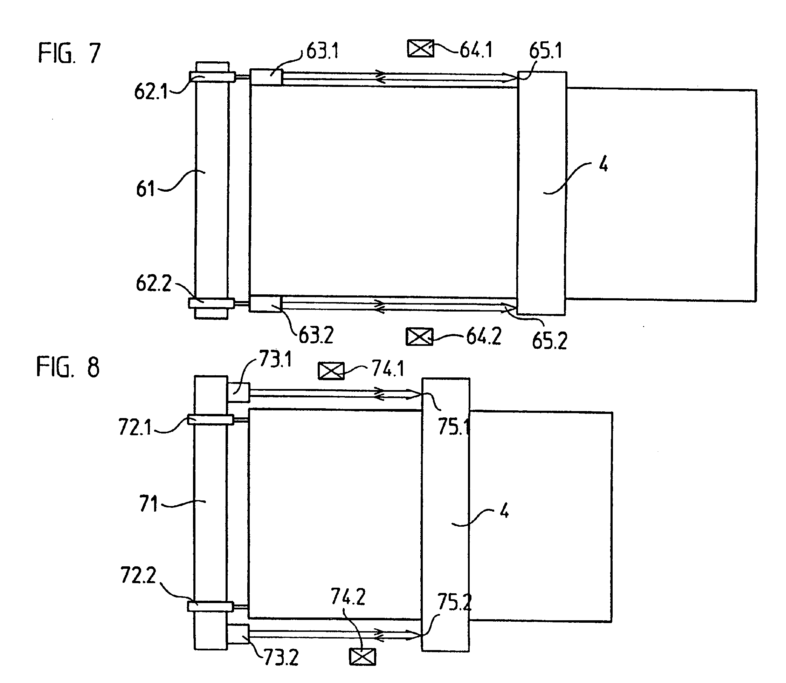

Alle bisherigen Ausführungsbeispiele sind davon ausgegangen, daß die Maßstäbe 1.1 und 1.2 im Bereich ihrer beiden Enden an der Maschine befestigt werden. Falls jedoch nur eine Befestigung im Bereich eines einzigen Endes jedes Maßstabs 1.1 und 1.2 vorgesehen ist, wie in Fig. 6 dargestellt, wird nur im Bereich dieser fixierten Enden der Maßstäbe 1.1 und 1.2 eine temperaturstabilen Verbindungsbrücke 91 vorgesehen. Ein Ende der Verbindungsbrücke ist dabei im Bereich eines Endes eines ersten Maßstabs 1.1 befestigt, das andere Ende der Verbindungsbrücke 91 trägt einen Abtastkopf, durch den die Verschiebung des anderen Maßstabs 1.2 relativ zum ersten Maßstab 1.1 gemessen wird. Im Bereich der anderen Enden der Maßstäbe 1.1 und 1.2 sind Temperaturfühler 92.1 und 92.2 angeordnet. Unter Annahme konstanter Temperatur über der gesamten Maßstabslänge und bei Kenntnis des Ausdehnungskoeffizienten des Maßstabsmaterials kann dann ein Modell für die temperaturabhängige Ausdehnung der Maßstäbe 1.1 und 1.2 berechnet werden und die an der Gantry-Achse 4 gemessenen Werte können korrigiert werden.

In Figur 7 ist ein weiteres erfindungsgemäßes Ausführungsbeispiel dargestellt. Auf der Verbindungsbrücke 61 sind wiederum zwei Taster 62.1 und 62.2 zur Ermittlung der Lage der Meßsysteme 63.1 und 63.2 vorgesehen. Diese Meßsystem 63.1 und 63.2 werden nunmehr durch Laserinterferometer realisiert. Dadurch muß nur eine Verbindungsbrücke 61 an einer Seite der Maschine vorgesehen werden. Die Laserinterferometer 63.1 und 63.2 beinhalten je einen Retroreflektor 65.1 und 65.2 zur Reflexion des Meßstrahls von de Gantry-Achse 4 in die Interferometeranordnung 63.1 bzw. 63.2. Weiterhin sind Detektoren 64.1 und 64.2 vorgesehen, um die die Wellenlänge des Laserstrahls beeinflussenden Umgebungsbedingungen festzustellen. Ändert sich die Maschinengeometrie beispielsweise durch Temperaturschwankungen, so daß Laserinterferometer 63.2 relativ zu Laserinterferometer 63.1 verschoben wird, kann diese Verschiebung durch die Meßsignale der Taster 62.1 und 62.2 ermittelt und kompensiert werden. Dadurch wird sichergestellt, daß die Antriebe der Gantry-Achse 4 synchron laufen und diese nicht verkanten können. Die Verbindungsbrücke 61 ist dabei wiederum aus Material anzufertigen, welches eine möglichst geringe temperaturabhängige Geometrieänderung aufweist.

Eine Variation der Ausführung aus Figur 7 ist in Figur 8 dargestellt. Es sind zwei parallele Laserinterferometer 73.1 und 73.2 mit zugehörigen Detektoren 74.1 und 74.2 sowie Retroreflektoren 75.1 und 75.2 vorgesehen. Allerdings werden die Laserinterferometer 73.1 und 73.2 auf der temperaturstabilen Verbindungsbrücke 71 befestigt. Dadurch werden keine zusätzlichen Taster 72.1 und 72.2 mehr benötigt, da nunmehr die Laserinterferometer selbst auf der temperaturstabilen Verbindungsbrücke 71 befestigt sind. Diese können nun dazu verwendet werden, starke Geometrieänderungen der Maschine zu detektieren, bei denen zu befürchten ist, daß die Gantry-Achse 4 nicht mehr in den vorgesehenen Führungen bleibt. In einem solchen Fall kann eine Warnmeldung ausgegeben werden, die beinhaltet, daß die Maschinengeometrie keinen ordnungsgemäßen Betrieb mehr erlaubt.

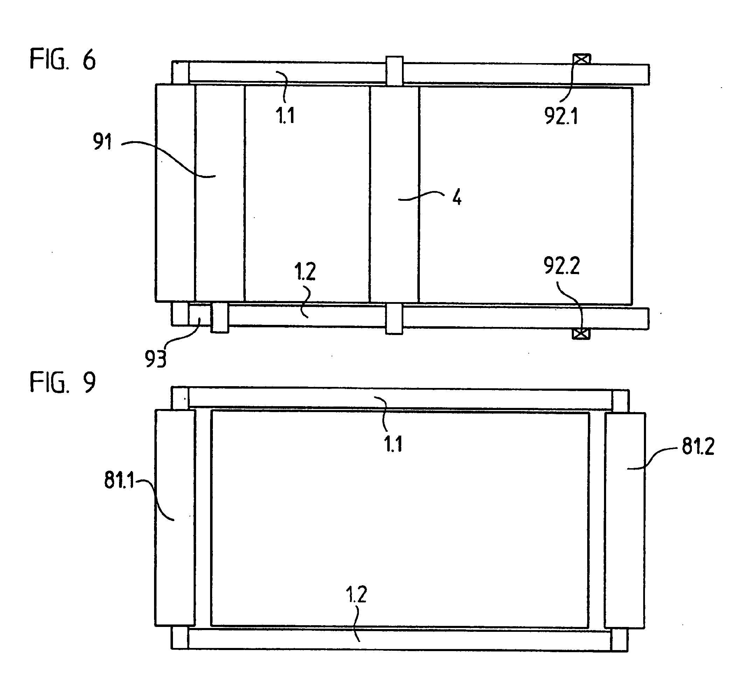

Fig. 9 zeigt eine weitere Ausführungsform der erfindungsgemäßen Anordnung. Hier werden zwei parallele Maßstäbe 1.1 und 1.2 zwischen zwei temperaturstabilen Verbindungsbrücken 81.1 und 81.2 aufgespannt. Mit der zwischen den Maßstäben 1.1 und 1.2 und den Verbindungsbrücken 81.1 und 81.2 befindlichen Maschine muß dabei kein Kontakt bestehen, sobald die gesamte Anordnung aus Maschine, Verbindungsbrücken 81.1, 81.2 und Maßstäben 1.1, 1.2 kalibriert wurde. Da die Maßstäbe 1.1 und 1.2 nur mit den temperaturstabilen Verbindungsbrücken 81.1 und 81.2 verbunden stehen und gespannt sind, haben sie keine Möglichkeit sich temperaturabhängig derart zu verformen, daß Meßfehler entstehen. Eine temperaturbedingte Geometrieänderung in der Maschine hat daher keinen Einfluß auf die Meßsysteme. Die Längen an den beiden Enden der Maßstäbe 1.1 und 1.2, die lediglich zur Befestigung an den Verbindungsbrücken 81.1 und 81.2 benötigt werden, müssen dabei selbstverständlich keine Teilungsstruktur aufweisen.

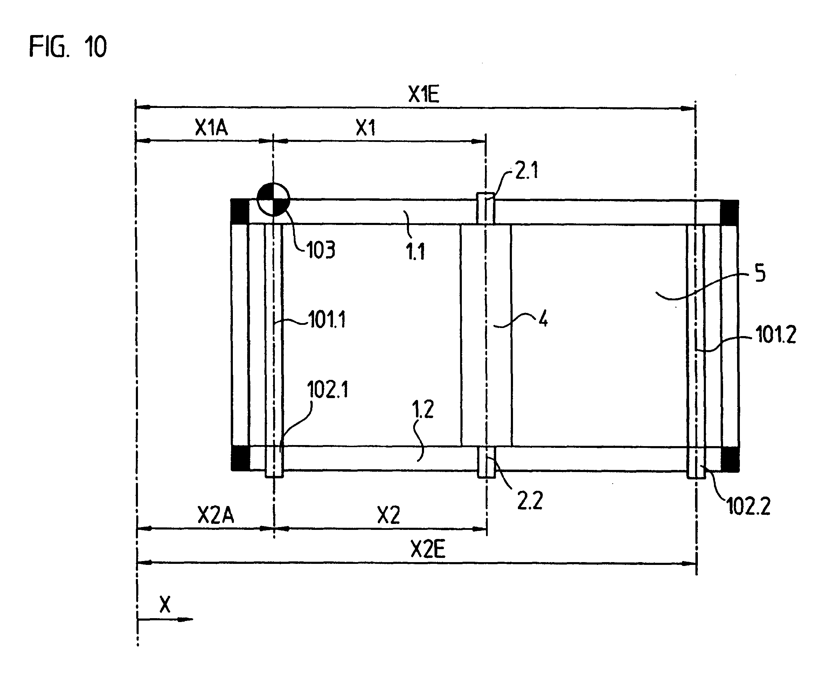

Im folgenden soll ein für die Kompensation der relativen Verschiebung der Maßstäbe 1.1 und 1.2 zueinander geeignetes Verfahren beschrieben und erläutert werden. Zur Kompensation der relativen Verschiebung des Maßstabs 1.2 gegenüber dem Maßstab 1.1 in Meßrichtung x werden, wie in Fig. 10 dargestellt, folgende Bezeichnungen gewählt:

1.1: Erster Maßstab, zu dem die relative Verschiebung des zweiten Maßstabs 1.2 ermittelt wird,
1.2: Zweiter Maßstab, der sich aufgrund thermischer Ausdehnung relativ zum ersten Maßstab 1.1 verschiebt,
2.1: Abtastkopf der Gantryachse 4 für Maßstab 1.1,
2.2: Abtastkopf der Gantryachse 4 für Maßstab 1.2,
4: Gantryachse, die in Meßrichtung x verfahren wird,
5: Maschinenbett,
101.1: Verbindungsbrücke zwischen erstem und zweitem Maßstab im Bereich eines ersten Endes der Maßstäbe,
101.2: Verbindungsbrücke zwischen erstem und zweitem Maßstab im Bereich eines zweiten Endes der Maßstäbe,
102.1: An der Verbindungsbrücke 101.1 befestigter Abtastkopf im Bereich eines ersten Endes der Maßstäbe,
102.2: An der Verbindungsbrücke 101.1 befestigter Abtastkopf im Bereich eines zweiten Endes der Maßstäbe,
103: Referenzpunkt der gesamten Anordnung in Meßrichtung x,
x: Meßrichtung der beiden Maßstäbe,
X1A: Position des Beginns des Meßbereichs von Maßstab 1.1 in Meßrichtung x,
X2A: Position des Beginns des Meßbereichs von Maßstab 1.2 in Meßrichtung x,
X1E: Position des Endes des Meßbereichs von Maßstab 1.1 in Meßrichtung x,
X2E: Position des Endes des Meßbereichs von Maßstab 1.2 in Meßrichtung x,
X1: Tatsächliche Position der Gantryachse 4 in Meßrichtung am Maßstab 1.1,
X2: Tatsächliche Position der Gantryachse 4 in Meßrichtung am Maßstab 1.2,
A2.1: Ausgabewert von Abtastkopf 2.1,
A2.2: Ausgabewert von Abtastkopf 2.2,
A102.1: Ausgabewert von Abtastkopf 102.1,

A102.2: Ausgabewert von Abtastkopf 102.2,

Werden Positionen bei einer von der Kalibriertemperatur (z.B. 20 Grad Celsius) unterschiedlichen Temperatur gemessen, werden diese mit einem Strich versehen, z.B: X1A' bezeichnet die Position des Beginns des Meßbereichs von Maßstab 1.1 in Meßrichtung x bei einer Temperatur ungleich der Kalibriertemperatur (20 Grad Celsius).

Werden nur einseitig im Bereich X1A und X2A an der Maschine befestigte Meßsystem bzw. Maßstäbe verwendet, wie in Fig. 6 dargestellt, geht man zur Kompensation des Ausgabewerts des Abtastkopfes 2.2 der Gantryachse 4 von einer temperaturbedingten Geometrieänderung der Maschine aus, bei der sich der Maßstab 1.2 unter dem Abtastkopf 102.1 verschoben hat. Die Kompensation des Ausgabewerts A2.2 von Abtastkopf 2.2 erfolgt dann nach folgender Gleichung:

$$A2.2 = A102.1' + A2.2'$$

Es wird also zu dem von Abtastkopf 2.2 ermittelten Positionswert A2.2' in Meßrichtung x die Verschiebung A102.1 addiert, um die sich der Befestigungspunkt von Maßstab 1.2 relativ zum Befestigungspunkt von Maßstab 1.1 verschoben hat.

Wird eine erfindungsgemäße Anordnung wie in Fig. 7 dargestellt, verwendet, geht man zur Kompensation des Ausgabewerts X2' des Laserinterferometers 63.2 zur Bestimmung der Position der Gantryachse 4 von einer temperaturbedingten Geometrieänderung der Maschine aus, bei der sich der Wert der auf der temperaturstabilen Verbindungsbrücke 61 montierten Taster 62.1 und 62.2 aufgrund einer Temperaturänderung unterschiedlich verändert hat. Die Kompensation des Ausgabewerts AW von Laserinterferometer 63.1 erfolgt dann nach folgender Gleichung:

$$X2' = X1A' - X2A' + X1$$

Es wird also zu der Verschiebung der Maschine in Meßrichtung, die durch die beiden Taster 62.1 und 62.2 gemessen wird, der durch das mittels Laserinterferometer 63.1 realisierte Meßsystem gemessenen Wert addiert. Die oben genannte Berechnungsmethode ist entsprechend zu modifizieren, wenn die Verschiebung der Meßsysteme relativ zueinander in Meßrichtung auf der anderen Seite der Maschine größer ist.

Werden zweiseitig im Bereich X1A, X2A und im Bereich X1E, X2E an der Maschine befestigte Meßsystem bzw. Maßstäbe verwendet, wie in Fig. 3 dargestellt, geht man zur Kompensation des Ausgabewerts des Abtastkopfes 2.2 der Gantryachse 4 von einer temperaturbedingten Geometrieänderung der Maschine aus, bei der sich der Maßstab 1.2 unter den beiden Abtastköpfen 102.1 und 102.2 verschoben hat. Die Kompensation des Ausgabewerts A2.2 von Abtastkopf 2.2 erfolgt dann nach folgender Gleichung:

$$A2.2' = A102.1' + A2.1 + A2.1 * (A102.2' - A102.1')/l,$$

wobei l die Länge des Maßstabes 1.2 ist. Durch diese Gleichung wird ein lineares Modell der temperaturbedingten Ausdehnung zur Kompensation der Verschiebung der beiden Maßstäbe relativ zueinander benutzt.

Bei einer erfindungsgemäßen Anordnung der Meßsysteme gemäß den Figuren 2, 4 oder 5, erfolgt die Kompensation des Ausgabewerts A2.2 des Abtastkopfes 2.2 wie folgt:

$$A2.2' = l * (A102.1' + A2.1)/(l-A102.1'+A102.2')$$

Auch hier wird wieder von einem linearen Modell für die Verschiebung des Maßstabs 1.2 relativ zum Maßstab 1.1 ausgegangen und eine entsprechende lineare Kompensation durchgeführt.

Die oben beschriebenen Kompensationsverfahren werden vorzugsweise durch digitale Baugruppen durchgeführt, denen die erforderlichen Meßwerte der Meßsysteme und der weiteren, an den Verbindungsbrücken angeordneten Meßgeräte zugeführt werden. Diese digitalen Baugruppen werden entweder als Interface zwischen den Meßsystemen und Meßgeräten sowie mindestens einer weiteren Verarbeitungseinheit für die Meßsignale angeordnet oder in die weitere Verarbeitungseinheit integriert ausgeführt. Bei einer Realisierung als Interface, gibt dieses nur noch die korrigierten Meßwerte der beiden Meßsysteme aus.

**Patentansprüche**

1. Anordnung mit

   - parallel zueinander angeordneten und quer zur Meßrichtung (X) voneinander beabstandeten Längenmeßsystemen (1.1, 1.2) an einer Maschine, **gekennzeichnet durch**
   - mindestens eine Verbindungsbrücke (22.1, 22.2, 31.1, 31.2, 41.1, 41.2, 91) mit temperaturunabhängiger Geometrie zwischen den beiden Längenmeßsystemen (1.1, 1.2) zur Verringerung temperaturbedingter Maßabweichungen der Längenmeßsysteme (1.1, 1.2), wobei
   - die Verbindungsbrücke (22.1, 22.2, 31.1, 31.2, 41.1, 41.2, 91) mit einem ersten Längenmeßsystem (1.1) an einem ersten Punkt in Meßrichtung (X) fest verbunden ist, und dass
   - mindestens ein Meßgerät (20.1, 20.2, 21.1, 21.2, 21.3, 21.4, 32.1, 32.2, 42.1, 42.2, 93) vorgesehen ist, welches die Verschiebung zwischen der Verbindungsbrücke (22.1, 22.2, 31.1, 31.2, 41.1, 41.2, 91) und dem zweiten Längenmeßsystem (1.2) in Meßrichtung (X) ermittelt.

2. Anordnung nach Anspruch 1, **dadurch gekennzeichnet, daß** die Verbindungsbrücke zwischen den beiden parallelen Längenmeßsystemen (1.1, 1.2) ein Lichtstrahl (22.1, 22.2) ist.

3. Anordnung nach Anspruch 2, **dadurch gekennzeichnet, daß** das Meßgerät (20.1, 20.2, 22.1, 22.2, 21.1, 21.2, 21.3, 21.4), welches die relative Verschiebung der beiden Längenmeßsysteme (1.1, 1.2) zueinander mißt, mindestens zwei lichtempfindliche Dioden (21.1, 21.2, 21.3, 21.4) sind, die in Meßrichtung (X) hintereinander angeordnet sind.

4. Anordnung nach Anspruch 1, **dadurch gekennzeichnet, daß** die mindestens eine Verbindungsbrücke (31.1, 31.2, 41.1, 41.2) eine im wesentlichen senkrecht zur Meßrichtung (X) verlaufende Strebe ist, die im Bereich des Endes des ersten Längenmeßsystems (1.1) oder des Befestigungspunktes des Maßstabs (1.1) des ersten Längenmeßsystems an der Maschine oder am Maßstab (1.1) selbst befestigt ist.

5. Anordnung nach Anspruch 4, **dadurch gekennzeichnet, daß** die Verbindungsbrücke (31.1, 31.2) am anderen Ende einen Abtastkopf (32.1, 32.2) aufweist, durch den der Maßstab (1.2) des zweiten Längenmeßsystems abgetastet wird.

6. Anordnung nach Anspruch 4, **dadurch gekennzeichnet, daß** die Verbindungsbrücke (41.1, 41.2) am anderen Ende einen Taster (42.1, 42.2) aufweist, durch den mindestens ein Ende des Maßstabs (1.2) des zweiten Längenmeßsystems oder der Bereich der Maschine, in dem dieser Maßstab (1.2) an der Maschine befestigt ist, abgetastet wird.

7. Anordnung nach einem der Ansprüche 1 bis 6, **dadurch gekennzeichnet, daß** in Meßrichtung (X) im Bereich von beiden Enden der Längenmeßsysteme (1.1, 1.2) jeweils eine Verbindungsbrücke (31.1, 31.2, 41.1, 41.2) und ein Meßgerät (32.1, 32.2, 42.1, 42.2) vorgesehen sind.

8. Anordnung nach einem der Ansprüche 1 bis 6, **dadurch gekennzeichnet, daß** die Längenmeßsysteme (1.1, 1.2) nur an einem Ende fest mit der Maschine verbunden sind, daß an diesem Ende die Verbindungsbrücke (93) vorgesehen ist, daß die Verbindungsbrücke (91) im Bereich eines Endes oder eines Befestigungspunktes im Bereich des Endes des ersten Längenmeßsystems (1.1) fest mit der Maschine oder dem ersten Längenmeßsystem (1.1) verbunden ist, daß am anderen Ende der Verbindungsbrücke (91) ein Abtastkopf (91) für das zweite Längenmeßsystem (1.2) vorgesehen ist und daß im Bereich der anderen Enden der Längenmeßsysteme (1.1, 1.2) Temperaturfühler (92.1, 92.2) vorgesehen sind.

9. Anordnung mit

   - parallel zueinander angeordneten und quer zur Meßrichtung (X) voneinander beabstandeten Längenmeßsystemen (1.1, 1.2, 63.1, 63.2) an einer Maschine, **gekennzeichnet durch**

- mindestens eine Verbindungsbrücke (51.1, 51.2, 61) mit temperaturunabhängiger Geometrie zwischen den beiden Längenmeßsystemen (1.1, 1.2, 63.1, 63.2) zur Verringerung temperaturbedingter Maßabweichungen der Längenmeßsysteme (1.1, 1.2, 63.1, 63.2), wobei
- die Verbindungsbrücke (51.1, 51.2, 61) ohne starre Verbindung zur Maschine und den Längenmeßsystemen (1.1, 1.2, 63.1, 63.2) angeordnet ist, wodurch die Verbindungsbrücke (51.1, 51.2, 61) unabhängig von Geometrieänderungen der Maschine ist, und dass
- ein erstes Meßgerät (52.1, 52.3, 52.4, 62.1) vorgesehen ist, welches die Verschiebung zwischen der Verbindungsbrücke (51.1, 51.2, 61) und dem ersten Längenmeßsystem (1.1, 63.1) in Meßrichtung (X) ermittelt und
- ein zweites Meßgerät (52.2, 52.4, 62.2) vorgesehen ist, welches die Verschiebung zwischen der Verbindungsbrücke (51.1, 51.2, 61) und dem zweiten Längenmeßsystem (1.2, 63.2) in Meßrichtung (X) ermittelt.

**10.** Anordnung nach Anspruch 9, **dadurch gekennzeichnet, daß** zwei Verbindungsbrücken (51.1, 51.2) in Meßrichtung (X) jeweils gegenüber der Enden der Längenmeßsysteme (1.1, 1.2) angeordnet sind, und daß Meßgeräte (52.1. 52.2, 52.3, 52.4) an den Verbindungsbrücken befestigt sind, welche die Verschiebungen der Maschine und /oder der Längenmeßsysteme (1.1, 1.2) in Meßrichtung (X) ermitteln.

**11.** Anordnung nach Anspruch 9, **dadurch gekennzeichnet, daß** als Längenmeßsysteme Laserinterferometer verwendet werden, deren Laser (63.1, 63.2) an der Maschine befestigt sind, und daß eine Verschiebung der Laser (63.1, 63.2) aufgrund einer temperaturabhängigen Geometrieänderung der Maschine in Meßrichtung (X) durch Taster (62.1, 62.2) ermittelt wird, welche auf der Verbindungsbrücke (61) angeordnet sind.

**12.** Anordnung mit

- parallel zueinander angeordneten und quer zur Meßrichtung (X) voneinander beabstandeten Längenmeßsystemen (1.1, 1.2, 73.1, 73.2) an einer Maschine, **gekennzeichnet durch**
- mindestens eine Verbindungsbrücke (71, 81.1, 81.2) mit temperaturunabhängiger Geometrie zwischen den beiden Längenmeßsystemen (1.1, 1.2, 73.1, 73.2) zur Verringerung temperaturbedingter Maßabweichungen der Längenmeßsysteme (1.1, 1.2, 73.1, 73.2), wobei
- die Verbindungsbrücke (71, 81.1, 81.2) ohne starre Verbindung zur Maschine angeordnet ist, wodurch die Verbindungsbrücke (71, 81.1, 81.2) unabhängig von Geometrieänderungen der Maschine ist, und
- an dem Punkt, an dem die Verbindungsbrücke (71, 81.1, 81.2) auf das erste Längenmeßsystem (1.1, 73.1) trifft eine feste Verbindung zwischen der Verbindungsbrücke (71, 81.1, 81.2) und dem ersten Längenmeßsystem (1.1, 73.1) vorgesehen ist und
- an dem Punkt, an dem die Verbindungsbrücke (71, 81.1, 81.2) auf das zweite Längenmeßsystem (1.2, 73.2) trifft eine feste Verbindung zwischen der Verbindungsbrücke (71, 81.1, 81.2) und dem zweiten Längenmeßsystem (1.2, 73.2) vorgesehen ist.

**13.** Anordnung nach Anspruch 12, **dadurch gekennzeichnet, daß** zwei Verbindungsbrücken (81.1, 81.2) in Meßrichtung (X) jeweils gegenüber der Enden der Längenmeßsysteme (1.1, 1.2) angeordnet sind, und daß jeweils ein Ende der Längenmeßsysteme (1.1, 1.2) mit einer der Verbindungsbrücken (81.1, 81.2) fest verbunden ist.

**14.** Anordnung nach Anspruch 12, **dadurch gekennzeichnet, daß** die Maschine eine Gantry-Struktur mit einer Gantry-Achse (4) aufweist, daß als Längenmeßsysteme (1.1, 1.2) für die Gantryachse (4) Laserinterferometer verwendet werden, und daß die Laser (73.1, 73.2) an der Verbindungsbrücke (71) und die Retroreflektoren (75.1, 75.2) an der Gantryachse (4) befestigt sind.

**15.** Verfahren zur Verringerung temperaturbedingter Maßabweichungen von parallel zueinander angeordneten und quer zur Meßrichtung (X) voneinander beabstandeten Längenmeßsystemen (1.1, 1.2) an einer Maschine, wobei

- eine Verschiebung zwischen Endpunkten der Längenmeßsysteme (1.1, 1.2) in Meßrichtung (X) ermittelt wird,
- ein Modell gebildet wird, durch das die Verschiebung zwischen den parallelen Längenmeßsystemen (1.1, 1.2) ermittelt wird, und
- Meßwerte (X1, X2) der Längenmeßsysteme (1.1, 1.2) mit den im Modell ermittelten Korrekturwerten für diese Meßwerte (X1, X2) korrigiert werden.

**16.** Verfahren nach Anspruch 15, **dadurch gekennzeichnet, daß** bei Verwendung von an der Maschine fixierten Laserinterferometern (63.1, 64.1, 65.1, 63.2, 64.2, 65.2) als parallele Längenmeßsysteme zur Kompensation von Verschiebungen der beiden Längenmeßsysteme relativ zueinander der Meßwert des zweiten Laserinterferometers (63.2, 64.2, 65.2) berechnet wird als Summe aus dem Meßwert des ersten Laserinterferometers (X1) plus der in Meßrichtung (X) gerichteten Differenz der Befestigungspunkte des ersten Laserinterferometers (X1A) und des zweiten Laserinterferometers (X2A).

**17.** Verfahren nach Anspruch 15 für Anordnungen nach Anspruch 4 oder 5, **dadurch gekennzeichnet, daß** der Meßwert (X2) eines zweiten Längenmeßsystems (1.2) berechnet wird aus der Summe der Verschiebung (A102.1') des zweiten Längenmeßsystems (1.2) entgegen der Meßrichtung (X) plus dem Meßwert (X1) des ersten Längenmeßsystems plus der mit dem Quotienten aus Meßwert des ersten Längenmeßsystems (X1) durch Länge (I) des Längenmeßsystems multiplizierten Differenz der Verschiebung (A102.2') des zweiten Längenmeßsystems (1.2) in Meßrichtung (X) minus Verschiebung (A102.1') des zweiten Längenmeßsystems (1.2) entgegen der Meßrichtung (X).

**18.** Verfahren nach Anspruch 15 für Anordnungen mit einseitig an der Maschine fixierten Längenmeßsystemen (1.1, 1.2) **dadurch gekennzeichnet, daß** der Meßwert (X2) eines zweiten Längenmeßsystems (1.2) berechnet wird aus der Summe der Verschiebung (A102.1) des zweiten Längenmeßsystems (1.2) entgegen der Meßrichtung (X) plus dem Meßwert (X1) des ersten Längenmeßsystems, die mit dem Quotienten aus Länge (I) des Längenmeßsystems durch die Summe aus Länge des Längenmeßsystems (I) plus der Verschiebung (A102.1') des zweiten Längenmeßsystems (1.2) entgegen der Meßrichtung (X) minus der Verschiebung (A102.2') des zweiten Längenmeßsystems (1.2) in Meßrichtung (X) multipliziert wird.

**19.** Verfahren nach einem der Ansprüche 15 bis 18, **dadurch gekennzeichnet, daß** die durch die Längenmeßsysteme und Meßgeräte ermittelten Meßwerte einer Kompensationsschaltung zugeleitet werden, daß in der Kompensationsschaltung aufgrund der empfangenen Signale ein mathematisches Modell zur Kompensation gebildet wird und daß durch die Kompensationsschaltung die kompensierten Meßwerte ausgegeben werden.

**Claims**

**1.** Arrangement comprising:

- length measurement systems (1.1, 1.2) arranged parallel to each other at a machine and spaced apart from one another at right angles to the measuring direction (X), **characterised by**
- at least one connecting bridge (22.1, 22.2, 31.1, 31.2, 41.1, 41.2, 91), having a geometry which is independent of temperature, arranged between the two length measurement systems (1.1, 1.2) to reduce temperature-related measurement deviations in the length measurement systems (1.1, 1.2),
- the connecting bridge (22.1, 22.2, 31.1, 31.2, 41.1, 41.2, 91) being securely connected to a first length measurement system (1.1) at a first point in measuring direction (X), and
- at least one measuring device (20.1, 20.2, 21.1, 21.2, 21.3, 21.4, 32.1, 32.2, 42.1, 42.2, 93) being provided which determines the shift between the connecting bridge (22.1, 22.2, 31.1, 31.2, 41.1, 41.2, 91) and the second length measurement system (1.2) in measuring direction (X).

**2.** Arrangement according to claim 1, **characterised in that** the connecting bridge between the two parallel length measurement systems (1.1, 1.2) is a light beam (22.1, 22.2.).

**3.** Arrangement according to claim 2, **characterised in that** the measuring device (20.1, 20.2, 22.1, 22.2, 21.1, 21.2, 21.3, 21.4) which measures the relative shift of the two length measurement systems (1.1, 1.2) with respect to each other, comprises at least two light-sensitive diodes (21.1, 21.2, 21.3, 21.4) which are arranged the one behind the other in measuring direction (X).

**4.** Arrangement according to claim 1, **characterised in that** the at least one connecting bridge (31.1, 31.2, 41.1, 41.2) is a strut which extends substantially perpendicular to the measuring direction (X) and is secured in the region of the end of the first length measurement system (1.1), or of the fastening point of the scale (1.1) of the first length measurement system, to the machine or to the scale (1.1) itself.

**5.** Arrangement according to claim 4, **characterised in that** the connecting bridge (31.1, 31.2) has at the other end a scanning head (32.1, 32.2) by which the scale (1.2) of the second length measurement system is scanned.

6. Arrangement according to claim 4, **characterised in that** the connecting bridge (41.1, 41.2) has at the other end a probe (42.1, 42.2) by which at least one end of the scale (1.2) of the second length measurement system, or the region of the machine in which this scale (1.2) is fastened to the machine, is scanned.

7. Arrangement according to one of claims 1 to 6, **characterised in that** respectively one connecting bridge (31.1, 31.2, 41.1, 41.2) and one measuring device (32.1, 32.2, 42.1, 42.2) are provided in measuring direction (X) in the region of both ends of the length measurement systems (1.1, 1.2).

8. Arrangement according to one of claims 1 to 6, **characterised in that** the length measurement systems (1.1, 1.2) are only securely connected to the machine at one end, **in that** connecting bridge (93) is provided at this end, **in that** connecting bridge (91) is securely connected to the machine or the first length measurement system (1.1) in the region of an end or of a fastening point in the region of the end of the first length measurement system (1.1), **in that** at the other end of connecting bridge (91) a scanning head (91) is provided for the second length measurement system (1.2) and **in that** temperature probes (92.1, 92.2) are provided in the region of the other ends of the length measurement systems (1.1, 1.2).

9. Arrangement comprising:

   - length measurement systems (1.1, 1.2, 63.1, 63.2) arranged parallel to each other at a machine and spaced apart from one another at right angles to the measuring direction (X), **characterised by**
   - at least one connecting bridge (51.1, 51.2, 61), having a geometry which is independent of temperature, arranged between the two length measurement systems (1.1, 1.2, 63.1, 63.2) to reduce temperature-related measurement deviations in the length measurement systems (1.1, 1.2, 63.1, 63.2),
   - the connecting bridge (51.1, 51.2, 61) being arranged without any rigid connection to the machine and the length measurement systems (1.1, 1.2, 63.1, 63.2) causing the connecting bridge (51.1, 51.2, 61) to be independent of changes in geometry of the machine, and
   - a first measuring device (52.1, 52.3, 52.4, 62.1) being provided which determines the shift between the connecting bridge (51.1, 51.2, 61) and the first length measurement system (1.1, 63.1) in measuring direction (X), and
   - a second measuring device (52.2, 52.4, 62.2) being provided which determines the shift between the connecting bridge (51.1, 51.2, 61) and the second length measurement system (1.2, 63.2) in measuring direction (X).

10. Arrangement according to claim 9, **characterised in that** two connecting bridges (51.1, 51.2) are arranged in measuring direction (X) respectively opposite the ends of the length measurement systems (1.1, 1.2), and **in that** fastened to the connecting bridges are measuring devices (52.1, 52.2, 52.3, 52.4) which determine the shifts of the machine and/or of the length measurement systems (1.1, 1.2) in measuring direction (X).

11. Arrangement according to claim 9, **characterised in that** laser interferometers are used as length measurement systems, the lasers (63.1, 63.2) of which are fastened to the machine, and **in that** a shift of the lasers (63.1, 63.2) as a result of a temperature-dependent change in geometry of the machine in measuring direction (X) is determined by probes (62.1, 62.2) which are arranged on the connecting bridge (61).

12. Arrangement comprising:

   - length measurement systems (1.1, 1.2, 73.1, 73.2) arranged parallel to each other at a machine and spaced apart from one another at right angles to the measuring direction (X), **characterised by**
   - at least one connecting bridge (71, 81.1, 81.2), having a geometry which is independent of temperature, arranged between the two length measurement systems (1.1, 1.2, 73.1, 73.2) to reduce temperature-related measurement deviations in the length measurement systems (1.1, 1.2, 73.1, 73.2),
   - the connecting bridge (71, 81.1, 81.2) being arranged without any rigid connection to the machine, causing the connecting bridge (71, 81.1, 81.2) to be independent of changes in geometry of the machine, and
   - at the point at which the connecting bridge (71, 81.1, 81.2) meets the first length measurement system (1.1, 73.1), a secure connection being provided between the connecting bridge (71, 81.1, 81.2) and the first length measurement system (1.1, 73.1), and
   - at the point at which the connecting bridge (71, 81.1, 81.2) meets the second length measurement system (1.2, 73.2), a secure connection being provided between the connecting bridge (71, 81.1, 81.2) and the second length measurement system (1.2, 73.2).

13. Arrangement according to claim 12, **characterised in that** two connecting bridges (81.1, 81.2) are arranged in measuring direction (X) respectively opposite the ends of the length measurement systems (1.1, 1.2), and **in that** one end of each length measurement system (1.1, 1.2) is securely connected to one of the connecting bridges (81.1, 81.2).

14. Arrangement according to claim 12, **characterised in that** the machine has a gantry structure with a gantry axis (4), **in that** laser interferometers are used as length measurement systems (1.1, 1.2) for the gantry axis (4), and **in that** the lasers (73.1, 73.2) are fastened to the connecting bridge (71) and the retroreflectors (75.1, 75.2) are fastened to the gantry axis (4).

15. Method for reducing temperature-related measurement deviations of length measurement systems (1.1, 1.2) which are arranged parallel to each other at a machine and spaced apart from each other at right angles to the measuring direction (X), wherein

   - a shift between end points of the length measurement systems (1.1, 1.2) in measuring direction (X) is determined,
   - a model is formed by means of which the shift between the parallel length measurement systems (1.1, 1.2) is determined, and
   - measured values (X1, X2) of the length measurement systems (1.1, 1.2) are corrected with the correction values determined in the model for these measured values (X1, X2).

16. Method according to claim 15, **characterised in that**, when laser interferometers (63.1, 64.1, 65.1, 63.2, 64.2, 65.2) fixed to the machine are used as parallel length measurement systems, to compensate for shifts of the two length measurement systems relative to each other, the measured value of the second laser interferometer (63.2, 64.2, 65.2) is calculated as the sum of the measured value of the first laser interferometer (X1) plus the difference in measuring direction (X) of the attachment points of the first laser interferometer (X1A) and of the second laser interferometer (X2A).

17. Method according to claim 15 for arrangements according to claim 4 or 5, **characterised in that** the measured value (X2) of a second length measurement system (1.2) is calculated from the sum of the shift (A102.1') of the second length measurement system (1.2) counter to the measuring direction (X) plus the measured value (X1) of the first length measurement system plus the difference - multiplied by the quotient of the measured value of the first length measurement system (X1) divided by the length (1) of the length measurement system - of the shift (A102.2') of the second length measurement system (1.2) in measuring direction (X) minus the shift (A102.1') of the second length measurement system (1.2) counter to the measuring direction (X).

18. Method according to claim 15 for arrangements having length measurement systems (1.1, 1.2) fixed to the machine at one side, **characterised in that** the measured value (X2) of a second length measurement system (1.2) is calculated from the sum of the shift (A102.1) of the second length measurement system (1.2) counter to the measuring direction (X) plus the measured value (X1) of the first length measurement system, this sum being multiplied by the quotient of the length (1) of the length measurement system divided by the sum of the length of the length measurement system (1) plus the shift (A102.1') of the second length measurement system (1.2) counter to the measuring direction (X) minus the shift (A102.2') of the second length measurement system (1.2) in measuring direction (X).

19. Method according to one of claims 15 to 18, **characterised in that** the measured values determined by the length measurement systems and measuring devices are supplied to a compensating circuit, **in that** a mathematical model for compensation is formed in the compensating circuit on the basis of the received signals and **in that** the compensated measured values are output by the compensating circuit.

**Revendications**

1. Agencement comportant

   - des systèmes de mesure de longueurs (1.1, 1.2) disposés sur une machine, parallèlement l'un à l'autre, et en étant espacés l'un de l'autre transversalement à la direction de mesure (X), **caractérisé par**
   - au moins un élément de liaison (22.1, 22.2, 31.1, 31.2, 41.1, 41.2, 91) à géométrie indépendante de la température, qui se trouve entre les deux systèmes de mesure de longueurs (1.1, 1.2) aux fins de réduire des écarts de mesure, dus à la température, des systèmes de mesure de longueurs (1.1, 1.2), sachant que

- l'élément de liaison (22.1, 22.2, 31.1, 31.2, 41.1, 41.2, 91) est lié de manière fixe à un premier système de mesure de longueurs (1.1), en un premier point, dans la direction de mesure (X), et par le fait que
- il est prévu au moins un appareil de mesure (20.1, 20.2, 21.1; 21.2, 21.3, 21.4, 32.1, 32.2, 42.1, 42.2, 93) qui détermine le décalage entre l'élément de liaison (22.1, 22.2, 31.1, 31.2, 41.1, 41.2, 91) et le deuxième système de mesure de longueurs (1.2), dans la direction de mesure (X).

**2.** Agencement selon la revendication 1, **caractérisé par le fait que** l'élément de liaison entre les deux systèmes de mesure de longueurs (1.1, 1.2) parallèles est constitué d'un rayon lumineux (22.1, 22.2).

**3.** Agencement selon la revendication 2, **caractérisé par le fait que** l'appareil de mesure (20.1, 20.2, 22.1, 22.2, 21.1, 21.2, 21.3, 21.4), qui mesure le décalage relatif des deux systèmes de mesure de longueurs (1.1, 1.2) entre eux, est constitué d'au moins deux diodes photosensibles (21.1, 21.2, 21.3, 21.4) disposées les unes à la suite des autres dans la direction de mesure (X).

**4.** Agencement selon la revendication 1, **caractérisé par le fait que** l'élément de liaison (31.1, 31.2, 41.1, 41.2), au nombre d'au moins un, est une traverse qui est sensiblement perpendiculaire à la direction de mesure (X) et est fixée à la machine ou à l'échelle graduée (1.1) elle-même, dans la région de l'extrémité du premier système de mesure de longueurs (1.1) ou du point de fixation de l'échelle graduée (1.1) du premier système de mesure de longueurs.

**5.** Agencement selon la revendication 4, **caractérisé par le fait que** l'élément de liaison (31.1, 31.2) présente à son autre extrémité une tête de palpage (32.1, 32.2) qui explore l'échelle graduée (1.2) du deuxième système de mesure de longueurs.

**6.** Agencement selon la revendication 4, **caractérisé par le fait que** l'élément de liaison (41.1, 41.2) présente à son autre extrémité un palpeur (42.1, 42.2) qui explore au moins une extrémité de l'échelle graduée (1.2) du deuxième système de mesure de longueurs ou la zone de la machine dans laquelle cette échelle graduée (1.2) est fixée à la machine.

**7.** Agencement selon une des revendications 1 à 6, **caractérisé par le fait que** dans la direction de mesure (X), un élément de liaison (31.1, 31.2, 41.1, 41.2) et un appareil de mesure (32.1, 32.2, 42.1, 42.2) sont prévus dans la région des deux extrémités des systèmes de mesure de longueurs (1.1, 1.2).

**8.** Agencement selon une des revendications 1 à 6, **caractérisé par le fait qu'**une seule extrémité des systèmes de mesure de longueurs (1.1, 1.2) est liée de manière fixe à la machine, que cette extrémité porte l'élément de liaison (91), que l'élément de liaison (91) est lié de manière fixe à la machine ou au premier système de mesure de longueurs (1.1), dans la région d'une extrémité ou d'un point de fixation situé au niveau de l'extrémité du premier système de mesure de longueurs (1.1), que l'autre extrémité de l'élément de liaison (91) porte une tête de palpage (93) pour le deuxième système de mesure de longueurs (1.2) et que des capteurs de température (92.1, 92.2) sont prévus dans la région des autres extrémités des systèmes de mesure de longueurs (1.1, 1.2).

**9.** Agencement comportant

- des systèmes de mesure de longueurs (1.1, 1.2, 63.1, 63,2) disposés sur une machine, parallèlement l'un à l'autre, et en étant espacés l'un de l'autre transversalement à la direction de mesure (X), **caractérisé par**
- au moins un élément de liaison (51.1, 51.2, 61) à géométrie indépendante de la température, qui se trouve entre les deux systèmes de mesure de longueurs (1.1, 1.2, 63.1, 63.2) aux fins de réduire des écarts de mesure, dus à la température, des systèmes de mesure de longueurs (1.1, 1.2, 63.1, 63.2), sachant que
- l'élément de liaison (51.1, 51.2, 61) est installé sans fixation rigide avec la machine et les systèmes de mesure de longueurs (1.1, 1.2, 63.1, 63.2), grâce à quoi l'élément de liaison (51.1, 51.2, 61) est indépendant d'éventuelles variations géométriques de la machine, et par le fait que
- il est prévu un premier appareil de mesure (52.1, 52.3, 52.4, 62.1) qui détermine le décalage entre l'élément de liaison (51.1, 51.2, 61) et le premier système de mesure de longueurs (1.1, 63.1), dans la direction de mesure (X), et
- il est prévu un deuxième appareil de mesure (52.2, 52.4, 62.2) qui détermine le décalage entre l'élément de liaison (51.1, 51.2, 61) et le deuxième système de mesure de longueurs (1.2, 63.2), dans la direction de mesure (X).

10. Agencement selon la revendication 9, **caractérisé par le fait que** dans la direction de mesure (X), deux éléments de liaison (51.1, 51.2) sont respectivement disposés en vis-à-vis des extrémités des systèmes de mesure de longueurs (1.1, 1.2), et **par le fait que** des appareils de mesure (52.1, 52.2, 52.3, 52.4) sont fixés aux éléments de liaison et déterminent les décalages de la machine et/ou des systèmes de mesure de longueurs (1.1, 1.2) dans la direction de mesure (X).

11. Agencement selon la revendication 9, **caractérisé par le fait que** les systèmes de mesure de longueurs utilisés sont des interféromètres à laser dont le laser (63.1, 63.2) est fixé à la machine, et **par le fait qu'**un décalage des lasers (63.1, 63.2) suite à une variation géométrique, due à la température, de la machine, dans la direction de mesure (X), est détecté par des palpeurs (62.1, 62.2) qui sont disposés sur l'élément de liaison (61).

12. Agencement comportant

   - des systèmes de mesure de longueurs (1.1, 1.2, 73.1, 73,2) disposés sur une machine, parallèlement l'un à l'autre, et en étant espacés l'un de l'autre transversalement à la direction de mesure (X), **caractérisé par**
   - au moins un élément de liaison (71, 81.1, 81.2) à géométrie indépendante de la température, qui se trouve entre les deux systèmes de mesure de longueurs (1.1, 1.2, 73.1, 73.2) aux fins de réduire des écarts de mesure, dus à la température, des systèmes de mesure de longueurs (1.1, 1.2, 73.1, 73.2), sachant que
   - l'élément de liaison (71, 81.1, 81.2) est installé sans fixation rigide avec la machine, grâce à quoi l'élément de liaison (71, 81.1, 81.2) est indépendant d'éventuelles variations géométriques de la machine, et par le fait que
   - à l'endroit où l'élément de liaison (71, 81.1, 81.2) rejoint le premier système de mesure de longueurs (1.1, 73.1), il est prévu une liaison fixe entre l'élément de liaison (71, 81.1, 81.2) et le premier système de mesure de longueurs (1.1, 73.1), et
   - à l'endroit où l'élément de liaison (71, 81.1, 81.2) rejoint le deuxième système de mesure de longueurs (1.2, 73.2), il est prévu une liaison fixe entre l'élément de liaison (71, 81.1, 81.2) et le deuxième système de mesure de longueurs (1.2, 73.2).

13. Agencement selon la revendication 12, **caractérisé par le fait que** dans la direction de mesure (X), deux éléments de liaison (81.1, 81.2) sont respectivement disposés en vis-à-vis des extrémités des systèmes de mesure de longueurs (1.1, 1.2), et **par le fait que** chaque fois un extrémité des systèmes de mesure de longueurs (1.1, 1.2) est liée de manière fixe à l'un des éléments de liaison (81.1, 81.2).

14. Agencement selon la revendication 12, **caractérisé par le fait que** la machine présente une structure à portique mobile avec un axe formant portique mobile (4), que les systèmes de mesure de longueurs (1.1, 1.2) utilisés pour le portique mobile (4) sont des interféromètres à laser et que les lasers (73.1, 73.2) sont fixés à l'élément de liaison (71) et les rétroréflecteurs (75.1, 75.2) sont fixés au portique mobile (4).

15. Procédé pour réduire des écarts de mesure dus à la température de systèmes de mesure de longueurs (1.1, 1.2) disposés sur une machine, parallèlement l'un à l'autre, et en étant espacés l'un de l'autre transversalement à la direction de mesure (X), selon lequel

   - on détermine un décalage entre des points d'extrémité des systèmes de mesure de longueurs (1.1, 1.2) dans la direction de mesure (X),
   - on crée un modèle, avec lequel le décalage entre les systèmes de mesure de longueurs (1.1, 1.2) parallèles est déterminé, et
   - on corrige les valeurs de mesure (X1, X2) des systèmes de mesure de longueurs (1.1, 1.2) avec les valeurs de correction déterminées par le modèle pour ces valeurs de mesure (X1, X2).

16. Procédé selon la revendication 15, **caractérisé par le fait que** lorsque des interféromètres à laser (63.1, 64.1, 65.1, 63.2, 64.2, 65.2), fixés à la machine, sont utilisés comme systèmes de mesure de longueurs parallèles, la compensation de décalages entre les deux systèmes de mesure de longueurs est effectuée en calculant la valeur de mesure du deuxième interféromètre à laser (63.2, 64.2, 65.2) en tant que somme de la valeur de mesure du premier interféromètre (X1) et de la différence, dans la direction de mesure (X), entre les points de fixation du premier interféromètre (X1A) et du deuxième interféromètre (X2A).

17. Procédé selon la revendication 15 pour des agencements selon la revendication 4 ou 5, **caractérisé par le fait que** la valeur de mesure (X2) d'un deuxième système de mesure de longueurs (1.2) est calculée à partir de la somme du décalage (A102.1') du deuxième système de mesure de longueurs (1.2) dans le sens opposé à la direction de mesure (X), de la valeur de mesure (X1) du premier système de mesure de longueurs et de la différence entre le décalage (A102.2') du deuxième système de mesure de longueurs (1.2) dans la direction de mesure (X) et le décalage (A102.1') du deuxième système de mesure de longueurs (1.2) dans le sens opposé à la direction de mesure (X), multipliée par le quotient de la valeur de mesure du premier système de mesure de longueurs (X1) par la longueur (1) du système de mesure de longueurs.

18. Procédé selon la revendication 15 pour des agencements comportant des systèmes de mesure de longueurs (1.1, 1.2) fixés par un côté à la machine, **caractérisé par le fait que** la valeur de mesure (X2) d'un deuxième système de mesure de longueurs (1.2) est calculée à partir de la somme du décalage (A102.1) du deuxième système de mesure de longueurs (1.2) dans le sens opposé à la direction de mesure (X) et de la valeur de mesure (X1) du premier système de mesure de longueurs, somme qui est multipliée par le quotient de la longueur (1) du système de mesure de longueurs par la somme de la longueur du système de mesure de longueurs (1) et du décalage (A102.1') du deuxième système de mesure de longueurs (1.2) dans le sens opposé à la direction de mesure (X), moins le décalage (A102.2') du deuxième système de mesure de longueurs (1.2) dans la direction de mesure (X).

19. Procédé selon une des revendications 15 à 18, **caractérisé par le fait que** les valeurs de mesure déterminées par les systèmes de mesure de longueurs et les appareils de mesure sont transmises à un circuit de compensation, que le circuit de compensation, sur la base des signaux reçus, forme un modèle mathématique de compensation et que le circuit de compensation délivre les valeurs de mesure compensées.

FIG. 1

FIG. 2

1.1

20.1

20.2

22.1

22.2

21.1    21.2

21.3    21.4

1.2

FIG. 3

2.1    1.1

31.1

31.2

32.1    2.2    1.2    32.2

FIG. 4

FIG. 5

FIG. 7

FIG. 8

EP 1 137 973 B1

FIG. 6

FIG. 9

19

EP 1 137 973 B1

FIG. 10